# EUROPEAN PATENT APPLICATION

(11) **EP 2 018 087 A1**
(43) Date of publication of application: **21.01.2009**
(21) Application number: 07011389.9
(22) Date of filing: 11.06.2007
(51) Int. Cl.: H04W 76/02

(54) **Operator controlled configuration of end-systems for alternative access and establishment of direct point-to-point voice/data calls/sessions**

(71) Applicant: Nokia Siemens Networks Oy, 02610 Espoo (FI)
(72) Inventor: Fischer, Mathias, 36419 Spahl (DE); Schläger, Morten, Dr., 14059 Berlin (DE)
(74) Representative: Weidel, Gottfried

(57) **Abstract**

Operator controlled configuration of end-systems for alternative access and establishment of direct point-to-point voice/data calls/sessions.

The present invention relates to a method and an apparatus for establishing a direct connection session between two subscribers (11, 12) comprising the steps of: establishing a session between a first subscriber (11) and a network (10), establishing a session between the second subscriber (12) and the network (10), configuring the first and the second subscriber (11) for the use of an alternative network, and establishing a direct connection session (16) between the first and second subscriber (11, 12) via the alternative network, if network coverage for the alternative network is available for the first and the second subscriber (11, 12).

## Description

The present invention relates to a method and an apparatus for establishing of direct point-to-point voice/data calls/sessions between two subscribers.

The present invention relates further to a method and an apparatus wherein an existing infrastructure network, e.g. 3G network, is employed for setting up an alternative connection between two subscribers using a wireless technology.

An infrastructure network in the sense of the present application is any network using central components, e.g. mobile switching centre (MSC), at least for establishing and switching of connections and/or sessions between at least two subscribers.

A wireless technology in the sense of the present application is any technology suitable for establishing a direct, e.g. point-to-point connection between at least two subscribers.

Today most end-systems (e.g. cell phones, personal digital assistants (PDA), smart phones, laptop computers) are equipped with more than one, respectively alternative network interfaces to connect to the infrastructure network as well as via an (alternative) wireless technology. These end-systems are so called dual-mode or multi-mode end-systems. For example these end-systems comprise beside the 3G respectively UMTS interface, to connect with 3G/UMTS networks, often interfaces for alternative (non-3G) wireless access technologies, e.g. a wireless local area network (WLAN) interface and/or Bluetooth interface. The interface to connect to the infrastructure network may also be one of GSM-, WDMA-,WiMax-, CDMA-2000 and CDMA-interface.

In the case of two subscribers, either of them owning a dual mode or multi-mode mobile phone, when one subscriber wants to establish a session/call with the other subscriber, the connection would normally be established via the infrastructure network, even though the two subscribers are in direct communication range of the alternative wireless access technology, e.g. WLAN. Examples for this scenario can be a train station, sports arena or a construction site.

WLAN access to 3G networks is already standardized by 3GPP (I-WLAN). However, the standard describes only the attachment of WLAN functionality to a 3G network, whereas the present invention describes the direct communication between two subscribers (ad-hoc mode) via non-3G wireless access technology.

In a paper from A. K. Salkintzis "WLAN/3G Interworking Architectures for Next Generation Hybrid Data Networks", 2004 IEEE International Conference on communications; 20-24. June, 2004, Vol. 7, the use of 3G networks for signalling to implement authentication, authorization and accounting (AAA) in a WLAN environment is described.

However, these alternative wireless access technologies are not used for the direct establishment of communication between two end-systems, respectively two subscribers. The reason for this is on the one hand that the set-up of these alternative access technologies is complicated for the average user of an end-system and on the other hand because of security concerns of the users and network operators. Additionally, as these connections are established without any involvement of the network operator, the traffic can neither be controlled nor charged.

Accordingly it is an object of the present invention to provide a method for establishing a direct connection session between two subscribers via alternative wireless access technologies. It is a further object of the present invention to provide an apparatus for carrying out the method.

In order to attain the above objects, the present invention provides a method for establishing a direct connection session between two subscribers and an apparatus carrying out the method as defined in the independent claims. The dependent claims relate to preferred embodiments.

For establishing a direct connection session between two subscribers a session can be established between a first subscriber and an infrastructure network after a subscriber attempts to contact the other/second subscriber via the infrastructure network. Next a session can be established between the second subscriber and the infrastructure network. Subsequent, the first and the second subscriber can be configured for the use of an alternative wireless technology for the further connection establishment. Then a direct connection session can be established between the first and second subscriber via the alternative wireless technology, if network coverage for the alternative wireless technology is available for the first and the second subscriber. Therefore it is possible to setup/establish a direct connection between two subscribers via an alternative wireless technology using the infrastructure network for configuration and authentication.

The proposed method allows reducing the bandwidth used on the infrastructure network, especially in areas with high traffic load. Further, due to standard encryption methodology in IP networks, the security of the connection can be easily enhanced.

It is preferable that the method can check the position of a second subscriber, and the coverage and/or signal quality for the alternative network. Therefore a connection attempt via the alternative technology can be refused, if either sufficient coverage (e.g. both communication partners not in same 3G cell) and/or signal quality is not available, saving further resources.

Further, in the step establishing a session, the first and/or the second subscriber can transmit at least one capability parameter to the network. Additionally, the infrastructure network can store at least one capability parameter for at least one of the subscriber in a database or profile storage, e.g. Home Location Register (HLR). The capability parameter can be used to automatically configure the network and/or device. The capability parameter can be a bearer capability parameter and/or a reference to the capability of the user equipment, e.g. dual mode.

Additionally, the step checking the coverage and/or signal quality for the alternative wireless technology can be executed by the first subscriber and/or the second subscriber. As either subscriber can check the signal quality respectively the network coverage, and can report the result of the step checking the coverage to the network, the quality of the point-to-point connection can be further enhanced. The step checking the coverage and/or signal quality can also comprise checking of the used channel, wherein in a preferred embodiment the respective channel can be preconfigured by a setup message and only this channel may be checked for coverage.

Preferable, the interfaces for alternative wireless access technologies can be switched on/off by a setup message.

Preferably, for automatic configuration, the step checking the coverage can include sending a discovery command from a sending subscriber to a receiving other subscriber. Upon the reception of the discovery command the receiving subscriber can establish a session with the sending subscriber either via the infrastructure network or the alternative network.

It is further preferably that the first and the second subscriber can be configured by a setup message received from the network. The setup message can comprise at least one of channel number, symmetric key, public key and/or network address. The public key corresponds to the private key of the network and allows an asymmetrical encryption, wherein the symmetric key allows a symmetrical encryption. So either symmetrical and/or asymmetrical encryption between subscriber and network can be used.

More preferable, the public key can be signed by another trusted third party. The symmetric key can be transmitted encrypted by the key shared between a subscriber and a trusted third party / trusted entity, e.g. the infrastructure network.

The network can be a circuit switched network or a packet switched network. The alternative network can be a circuit switched network or a packet switched network.

The circuit switched network can be any network according the 3rd Generation Partnership Project (3GPP)-standard or 3GPP2-standard.

The packet switched network / 3G-Network can be one of Wireless Local Area Network (WLAN), Wireless Metropolitan Area Network (WMAN), Worldwide Interoperability for Microwave Access-Standard (WiMAX), IEEE 802.11 family and IEEE 802.15 family (e.g. ZigBee, Bluetooth).

It is further preferable that the alternative network automatically tests and sets up the connection between the subscribers. The connection can either be a direct connection between the subscribers or a multi-hop topology.

In a further embodiment, an apparatus is configured to carry out the above described method either in full or partial.

The above described features of the invention can be combined in any way as a whole or in part without departing from the scope of the disclosure of the invention.

These and other potential objects, features and advantages of the present invention will appear more fully from the following detailed description of exemplary embodiments of the invention. It is to be understood, however, that the scope of the present invention is not limited to the given embodiments shown in the accompanying schematically drawings.

For the further description of the present invention shows
- Fig. 1: schematically the idea underlying the present invention,
- Fig. 2: schematically a functional view of the present invention,
- Fig. 3: schematically a message exchange between two subscribes,
- Fig. 4: schematically a state chart of a user equipment (UE), and
- Fig. 5: schematically a state chart of a 3G network.

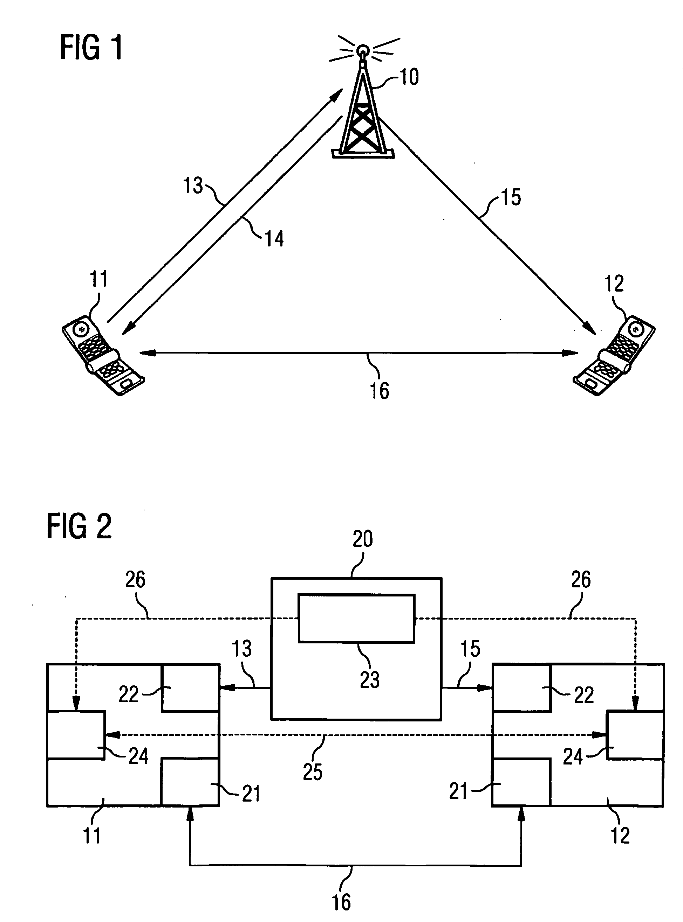

In Fig. 1 an example for the use of the present invention is shown. In the case a subscriber (A-Party) wants to establish a session/call with another subscriber (B-Party) utilizing his user equipment 11, the subscriber contacts a 3G network 10 as usual via the circuit switched connection 13. The 3G network 10 then locates the user equipment 12 of the other subscriber. When both subscribers are within communication range of an alternative network, the 3G network 10 transmits a setup message 14, 15 to the user equipments 11, 12. Then the user equipments 11, 12 establish a packet switched connection 16 via the alternative network between the subscribers.

Fig. 2 shows a functional view of the components provided in the network topology. Identical reference numerals designate similar functions/components. The user equipment 11, 12 comprises at least a 3G interface 22, a WLAN interface 21 and a WLAN configuration module 24. The mobile switching centre (MSC) 20 comprises at least a direct connectivity discovery and link setup (DCDLS) module 23. Reference numerals 13, 15 designate a circuit switched connection between the user equipments 11, 12 and the MSC 20. Reference numerals 16 designate a packet switched connection between the user equipments 11, 12. The WLAN configuration module 24 comprises an interface and protocol for remote configuration by the circuit switched network as well as control, e.g. the network operator needs means to terminate a direct connection between user equipments. The DCDLS module 23 allows the configuration of the WLAN interface 21 and discovery of the other user equipment 11, 12.

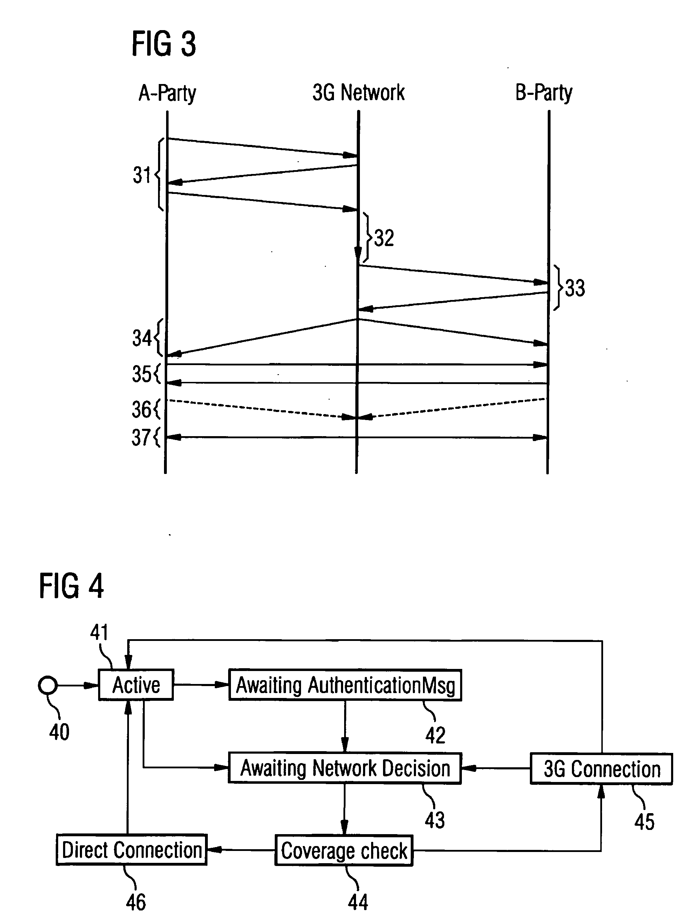

Fig. 3 shows exemplary the message exchange between the involved entities, A-Party 11, B-Party 12 and 3G Network 20.

In Step 31 the connection set-up request is intercepted and passed to the DCDLS module 23. Then the DCDLS module 23 locates the B-party in step 32, using standard mechanisms and performs the usual authentication and call setup procedure. With it, the contacted user equipment 11, 12 sends its capabilities to the network in step 33. If both user equipments 11, 12 support dual mode, the DCDLS module 23 checks if the two subscribers are within the same 3G cell (or location area), the usual connection attempt is interrupted, and the module sends an alternative access technology configuration command to B-party and A-party, using a new 3G signalling protocol (step 34).

When the configuration of both user equipments 11, 12 was successful, the DCDLS module 23 sends a discovery command to the A-party. Upon reception of this command, the A-party tries to contact the B-party via the alternative access technology (step 35). If the B-party cannot be contacted via the alternative access technology, a negative result is sent to the network and normal 3G call establishment is continued. If the B-party is contacted successfully and also some QoS tests are passed successfully, a VoIP or data session is started (step 37). This can be done by either direct signalling via the alternative access technology or via 3G signalling.

In Fig. 4 the state chart of a user equipment is illustrated. After being activated, the user equipment (UE) is in an Active state 41. Upon a connection attempt and contacting the network the UE arrives in an Awaiting AuthenticationMsg state 42. After the UE has received the respective message and has sent its answer and capabilities, the UE arrives at the Awaiting Network Decision state 43. The UE can also arrive at the Awaiting Network Decision state 43 from the Active state 41 after directly receiving the AuthenticationMsg and has sent its answer and capabilities to the Network. After having received a ConfigurationMsg the UE reaches the Coverage check state 44. From the Awaiting Network Decision state 43 the UE can reach the 3G Connection state 45, if the capabilities of the UE are not sufficient and a 3G connection is established. After the session has ended, the UE returns from the 3G Connection state 45 to the Active state 41. In the case, the result of the coverage check is positive, the UE arrives at the Direct Connection state 46 and a direct connection between the subscribers is established. After the session has ended, the UE returns from the Direct Connection state 46 to the Active state 41 and reports back to the network.

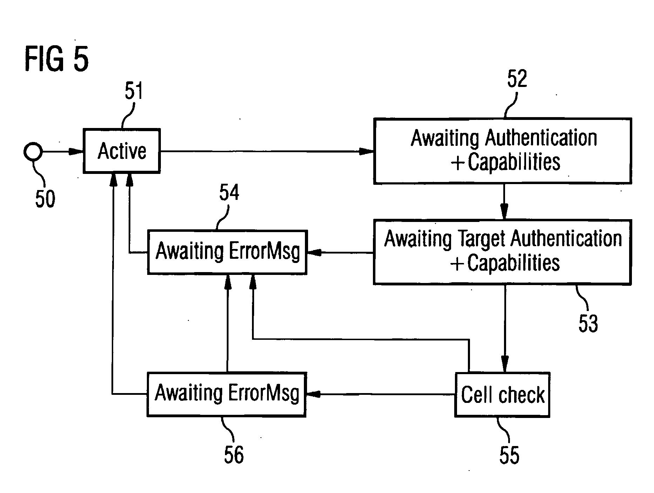

Fig. 5 illustrates the state chart of the 3G network. After being activated, the 3G network is in an Active state 51. Upon a connection request, the network sends an AuthenticationMsg and arrives in an Awaiting Authentication + Capacities state 52. After the network has received the respective message it sends an Authentication to the connection target and reaches the Awaiting Target Authentication + Capabilities state 53. From the Awaiting Target Authentication + Capabilities state 53 the network can arrive at the 3G Session Established state 54, if the capabilities of the UE are not sufficient and a 3G connection is established. After the session has ended, the network returns from the 3G Session Established state 54 to the Active state 51. In the case the capabilities are sufficient, the network reaches the Cell Check state 55 and determines if both subscribers are within the same cell. If the UEs are not in the same cell, a 3G session is established and the network reaches state 54.If the UEs are within the same cell, the network sends a configuration to the UEs and arrives at the Awaiting ErrorMsg state 56. In the Awaiting ErrorMsg state 56 the networks awaits a result on the coverage check, i.e. are the UEs within direct coverage of the alternative network. If the UEs are within coverage, a direct connection session is established. After the session has ended, the network receives a session report and returns to the Active state 51. In the case the UEs are not within coverage, a 3G session is established and the network reaches state 54. After the 3G session has ended, the network returns to the Active state 51.

The above described exemplary features and/or embodiments can be combined in any way as a whole or in part and said combinations shall also be implicitly disclosed by the above description.

### Abbreviations

- 3G: 3rd Generation technology
- 3GPP: 3rd Generation Partnership Project
- 3GPP2: 3rd Generation Partnership Project 2
- CDMA: Code Division Multiple Access
- GSM: Global System for Mobile Communications
- HLR: Home Location Register
- MSC: Mobile Switching Centre
- UE: User Equipment
- UMTS: Universal Mobile Telecommunications System
- WDMA: Wavelength Division Multiple Access
- WiMAX: Worldwide Interoperability for Microwave Access-Standard
- WLAN: Wireless Local Area Network
- WMAN: Wireless Metropolitan Area Network

## Claims

1. Method for establishing a direct connection session between two subscribers (11, 12) comprising the steps of:
- establishing a session between a first subscriber (11) and a network (10),
- establishing a session between the second subscriber (11) and the network (10),
- configuring the first and the second subscriber (11, 12) for the use of an alternative network, and
- establishing a direct connection session (16) between the first and second subscriber (11, 12) via the alternative network, if network coverage for the alternative network is available for the first and the second subscriber (11, 12).

2. Method according to claim 1, further comprising at least one step of:
- checking the position of a second subscriber, and
- checking the coverage and/or quality for the alternative network.

3. Method according to claim 1 or 2, wherein the step establishing a session the first and/or the second subscriber transmit at least one capability parameter to the network.

4. Method according to at least one of the preceding claims, wherein the step checking the coverage and/or quality for the alternative network is executed by the first subscriber and/or the second subscriber.

5. Method according to at least one of the preceding claims, wherein the step checking the coverage includes sending a discovery command from a sending subscriber to a receiving other subscriber.

6. Method according to at least one of the preceding claims, wherein upon the reception of the discovery command the receiving subscriber establishes a session with the sending subscriber via the alternative network.

7. Method according to at least one of the preceding claims, wherein the subscribers report the result of the step checking the coverage to the network.

8. Method according to at least one of the preceding claims, wherein the first and the second subscriber are configured by a setup message received from the network.

9. Method according to at least one of the preceding claims, wherein the setup message comprises at least one of channel number, symmetric key, public key and network address.

10. Method according to at least one of the preceding claims, wherein the network is a circuit switched network or a packet switched network and the alternative network is a packet switched network.

11. Method according to at least one of the preceding claims, wherein the network is a network according the 3rd Generation Partnership Project (3GPP)-standard.

12. Method according to at least one of the preceding claims, wherein the alternative network is one of Wireless Local Area Network (WLAN), Wireless Metropolitan Area Network (WMAN), Worldwide Interoperability for Microwave Access-Standard (WiMAX), and Bluetooth.

13. Method according to at least one of the preceding claims, wherein the network is configurable as a trusted third subscriber.

14. Apparatus configured to carry out the method according to at least one of the preceding claims.
